# EUROPÄISCHE PATENTSCHRIFT

(11) **EP 0 346 614 B1**
(45) Veröffentlichungstag und Bekanntmachung des Hinweises auf die Patenterteilung: **05.04.1995**
(21) Anmeldenummer: 89108655.5
(22) Anmeldetag: 13.05.1989
(51) Int. Cl.: H04L 12/28

(54) **Verfahren zum Initialisieren eines digitalen Signalübertragungssystems**
Method of initialising a digital signal transmission system
Procédé pour l'initialisation d'un système de transmission de données numériques

(30) Priorität: 17.06.1988 DE 3820613
(43) Veröffentlichungstag der Anmeldung: 20.12.1989
(73) Patentinhaber: GEBRÜDER MERTEN GMBH & CO. KG, D-51643 Gummersbach (DE); SIEMENS AKTIENGESELLSCHAFT, 80333 München (DE)
(72) Erfinder: Stefanski, Manfred, Dipl.-Ing., D-5270 Gummersbach (DE); Wester, Wolfgang, Dipl.-Ing., D-5063 Overath (DE); Gerlach, Horst, Dr.-Ing., D-8402 Neutraubling (DE); Tempes, Hans, Dipl.-Ing., D-8526 Bubenreuth (DE)
(74) Vertreter: Selting, Günther, Dipl.-Ing.

(56) Entgegenhaltungen:
- EP-A- 0 182 417
- WO-A-86/06890
- DE-A- 3 627 020
- COMPUTER NETWORKS AND ISDN SYSTEMS, Band 11, Nr. 2, Februar 1986, Seiten 133-146, Amsterdam, NL; W.M. LOUCKS et al.: "Implementation of a dynamic addressassignment protocol in a local area network"

## Beschreibung

Die Erfindung betrifft ein Verfahren zum Initialisieren eines digitalen Signalübertragungssystems der im Oberbegriff des Patentanspruches 1 angegebenen Art, insbesondere für die Hausleittechnik.

Ein bekanntes Signalübertragungssystem für die Hausleittechnik weist zahlreiche im wesentlichen identisch aufgebaute Schnittstellen auf, die an den Teilnehmerstellen angeordnet sind und durch Anfügen elektrischer Verknüpfungsbauteile kodiert werden. Auf diese Weise können zahlreiche Quelle-Ziel-Verbindungen zwischen ausgewählten Schnittstellen hergestellt werden.

Eine Schwierigkeit besteht in der Programmierung der Signalübertragungssysteme nach deren Installation. Wenn das Signalleitungsnetz eingerichtet und mit den Schnittstellen versehen ist, muß jeder einzelnen Anschlußstelle mitgeteilt werden, mit welcher anderen Anschlußstelle sie kommunizieren soll, und ob sie eine Quelle oder ein Ziel für die zu übertragenden Daten darstellt. Bei den zu übertragenden Daten unterscheidet man zwischen Schalt-Telegrammen (Schaltbefehlen), Regel-Telegrammen, z.B. zur Helligkeitssteuerung, Status-Telegrammen, z.B. zur Temperaturabfrage und Datenübertragungs-Telegrammen. Die am häufigsten zu übertragenden Programme sind Schalt-Telegramme. Der Schaltbefehl, der an einem Gerät gegeben wird, wird über die mit diesem Gerät verbundene Anschlußstelle auf das Signalleitungsnetz übertragen und einer Anschlußstelle zugeführt, die das ausgewählte Ziel darstellt. Diese Anschlußstelle gibt das Schaltsignal an ein angeschlossenes Gerät, z.B. ein Relais, weiter, das den Schaltbefehl ausführt. In ähnlicher Weise können Regel-Telegramme, Status-Telegramme und Datenübertragungs-Telegramme von jeweils einer ausgewählten Quelle zu einem mit dieser Quelle kommunizierenden Ziel übertragen werden. Die Festlegung, welche Quelle mit welchem Ziel kommuniziert und welcher Telegrammtyp übertragen werden soll, erfordert einen großen Aufwand. Üblicherweise ist jede Anschlußstelle mit zwei mechanischen Wähleinrichtungen ausgestattet, an denen die Adressen von Quelle und Ziel mechanisch einstellbar sind und anschließend gespeichert bleiben. Nachteilig ist hierbei jedoch, daß die mechanischen Wähler sehr viel Platz beanspruchen und daß die Anzahl der an ihnen einzustellenden Adressen sehr beschränkt ist. Die Anschlußstellen können wegen des großen Platzbedarfs der Wähleinrichtungen nicht in den üblichen Installationsdosen für Schalter und Steckdosen untergebracht werden. Außerdem erfordert die Programmierung mechanische Eingriffe an den Anschlußstellen.

Bei einem Signalübertragungssystem können nach dem Verlegen des Signalleitungsnetzes die Anschlußstellen an den dafür vorgesehenen Anschlußstellen montiert werden. In diesem Zustand ist noch eine beliebige Programmierung des Signalübertragungssystems und eine beliebige Zuordnung von Anschlußstellen zu bestimmten Funktionen und zu anderen Anschlußstellen möglich. Diese räumliche und funktionelle Zuordnung der zahlreichen installierten Anschlußstellen soll bei dem erfindungsgemäßen Signalübertragungssystem auf relativ einfache Weise ermöglicht werden, wobei die Anschlußstellen ohne eigene Wähleinrichtungen auskommen sollen.

Aus WO 86/06890 ist ein Verfahren zum Initialisieren eines digitalen Signalübertragungssystems bekannt, bei dem ein portables Steuergerät verwendet wird, welches drahtlos mit dem Signalübertragungssystem kommuniziert. Das tragbare Steuergerät erkennt über ein an das Signalleitungsnetz angeschlossenes Steuermodul, wenn eine Anschlußstelle an das Signalleitungsnetz angeschlossen wird oder eine bereits angeschlossene Anschlußstelle mit einem Schlüssel aktiviert wird. Das Steuergerät teilt dieser Anschlußstelle dann eine Kennung mit, die in der Anschlußstelle gespeichert wird und diese Anschlußstelle kennzeichnet. Wenn auf diese Weise alle Anschlußstellen bezeichnet worden sind, können die Steuermodule über das Leitungsnetz mit verschiedenen Sensormodulen und mit Ausführungsmodulen kommunizieren. Die Steuerung der Kommunikation zwischen den Modulen erfolgt über das tragbare Steuergerät, das ständiger Bestandteil der Anlage ist.

Der Erfindung liegt daher die Aufgabe zugrunde, ein Initialisierungsverfahren für ein digitales Signalübertragungssystem der im Oberbegriff der Patentansprüche 1 bzw. 2 angegebenen Art zu schaffen, bei dem die Initialisierung keine Eingriffe in die Anschlußstellen erfordert und diejenigen Anschlußstellen, die miteinander kommunizieren sollen, einander zuordnet.

Die Lösung dieser Aufgabe erfolgt bei einer ersten Variante der Erfindung mit den im kennzeichnenden Teil des Patentanspruchs 1 angegebenen Merkmalen und bei einer zweiten Variante mit den im kennzeichnenden Teil des Patentanspruchs 2 angegebenen Merkmalen.

Bei dem erfindungsgemäßen Signalübertragungssystem wird die Programmierung mit Hilfe eines Programmiergerätes durchgeführt, das an das Signalleitungsnetz angeschlossen werden kann und imstande ist, mit jeder der Anschlußstellen Signale auszutauschen und in jede der Anschlußstellen Daten einzugeben oder auch von den Anschlußstellen Daten abzufragen. Auf diese Weise werden die an das Signalleitungsnetz angeschlossenen Anschlußstellen nach ihrer Installation mit Hilfe des Programmiergerätes so individualisiert und programmiert, daß sie die an dem betreffenden Ort gewünschten Funktionen ausführen können.

Ein grundsätzliches Problem bei der Programmierung zahlreicher in einem Signalleitungsnetz verteilter Anschlußstellen besteht in der Identifizierung der einzelnen Anschlußstellen. Da es sich in der Regel um mehrere gleiche Anschlußstellen handelt, die vom Elektriker an den Anschlußstellen montiert worden sind, haben die Anschlußstellen zunächst keine Identifizierungsmerkmale. Für die Programmierung der Anschlußstellen müssen diese jedoch identifizierbar sein. Zu diesem Zweck wird erfindungsgemäß jede einzelne Anschlußstelle von dem Programmiergerät mit einer unverwechselbaren Kennung versehen. Diese Kennung wird in der Anschlußstelle gespeichert. Bei der Kennung handelt es sich beispielsweise um eine Zahl, z.B. um eine der Zahlen von 0 bis 255. Nachdem jeder Anschlußstelle eine dieser Zahlen zugeteilt worden ist, reagiert die Anschlußstelle auf einen Aufruf der betreffenden Kennung durch das Programmiergerät.

Wenn jede der Anschlußstellen mit einer unverwechselbaren Kennung versehen ist, enthält das Signalübertragungssystem noch keine Angaben darüber, an welchem Ort die einzelnen Anschlußstellen sich befinden. Die Kennung ist lediglich eine Zuteilung interner Daten, jedoch bedarf es noch der Zuordnung der Kennungen zu Ortsidentifizierungen, die durch den Menschen erkennbar sind, z.B. Schalter Küche, Deckenbeleuchtung Wohnzimmer, Sprechstelle Flur, Sprechstelle Haustür, Schalter Flur, Türöffner Haustür usw. Die vorstehenden Angaben enthalten nicht nur Ortsbestimmungen, sondern auch Bestimmungen über den Telegrammtyp, was nachfolgend erläutert wird. Zur Festlegung der Ortsbestimmung werden nach der ersten Variante der Erfindung die einzelnen Anschlußstellen nacheinander durch manuellen Eingriff aktiviert. Das Aktivieren einer Anschlußstelle wird von dem Programmiergerät registriert, wobei die betreffende Anschlußstelle zugleich ihre Kennung an das Programmiergerät mitteilt. In das Programmiergerät kann dann manuell die zugehörige Ortsbestimmung eingegeben werden, woraufhin das Programmiergerät Kennung und Ortsbestimmung der betreffenden Anschlußstelle einander zuordnet. Das Programmiergerät enthält dann beispielsweise die Information, daß die Anschlußstelle mit der Kennung 166 sich nahe der Tür in der Küche befindet.

Nachdem allen Anschlußstellen eine Ortsangabe zugeteilt worden ist, gibt das Programmiergerät jeder Anschlußstelle an, mit welcher bzw. welchen Anschlußstellen sie korrespondieren soll. Hierzu sind unterschiedliche Systeme möglich, die weiter unten erläutert werden. Das einfachste System besteht darin, daß dem Programmiergerät manuell eingegeben wird, mit welchen Anschlußstellen eine bestimmte Anschlußstelle korrespondieren soll und welcher Telegrammtyp für die Übertragung vorgesehen ist. Diese Daten werden in den Quellen-Anschlußstellen und den Ziel-Anschlußstellen gespeichert.

Das Einspeichern der Ortsangabe kann in weiterer Ausgestaltung der Erfindung auch zugleich mit der Zuteilung der Kennung in einem einzigen Schritt erfolgen, wenn die Bestückung der Schnittstellen mit Adaptern in einer zuvor nach einem Installationsplan genau festgelegten Reihenfolge erfolgt.

Bei der zweiten Variante der Erfindung wird die Ortsangabe jeder Anschlußstelle dadurch ermittelt, daß das Programmiergerät die einzelnen Schnittstellen nacheinander aufruft und die Anschlußstellen einen optischen oder akustischen Signalgeber enthalten, der auf den Aufruf der Anschlußstelle reagiert. Die Anschlußstellen werden beispielsweise in der Reihenfolge ihrer Kennungen (von 0 bis 255) aufgerufen und an der jeweils aufgerufenen Anschlußstelle wird der Signalgeber aktiviert. Der Monteur kann dann erkennen welche Anschlußstelle die betreffende Kennung hat, und in das Programmiergerät den Ort dieser Anschlußstelle eingeben. Die nächstfolgende Kennung wird dann aufgerufen, wenn die Ortseingabe der vorherigen Kennung erfolgt ist. Bei dieser zweiten Variante der Erfindung können in der Installationsphase sämtliche Anschlußstellen aktiviert werden, bevor die Identifizierung der Orte der Anschlußstellen erfolgt.

Vorzugsweise enthält das digitalee Signalübertragungssystem Anschlußstellen aus untereinander gleichen Schnittstellen, denen Adapter zugeordnet werden, welche in unterschiedlichen Typen vorhanden sind, so daß an jeder Anschlußstelle die geeignete Kombination aus Schnittstelle und Adapter installiert werden kann, damit das entsprechende Gerät angeschlossen werden kann, bei dem es sich um eine Leuchte, einen Meßfühler, einen Motor o.dgl. handelt.

Das Signalleitungsnetz des erfindungsgemäßen Signalübertragungssystems kann aus den Netzleitungen des elektrischen Versorgungsnetzes bestehen, über die zugleich die digitalen Signaldaten übertragen werden. Zweckmäßigerweise enthält das Signalleitungsnetz jedoch die Signalleitungen getrennt von den elektrischen Versorgungsleitungen, um gegenseitige Beeinflussungen zu vermeiden und zu verhindern, daß Störungen aus dem Versorgungsnetz das Signalleitungsnetz beeinflussen.

Ein besonderes Merkmal der Erfindung besteht darin, daß die Anschlußstellen, die dadurch programmiert werden, daß in die Speichereinrichtungen Daten wie Kennung, Ziel-Adresse, Quell-Adresse und Telegrammtyp eingegeben werden, keinerlei Wähleinrichtungen benötigen und auch keinen separaten Anschluß für eine Wähleinrichtung. Die Speicherinhalte werden jeder Anschlußstelle durch das Programmiergerät über das Signalleitungsnetz eingegeben. Auf diese Weise ist es möglich, die Anschlußstellen oder mindestens die Schnittstellen kleinvolumig als integrierte Schaltungen auszuführen, die in Wanddosen hineinpassen und lediglich Steckkontakte für das Anstecken eines Adapters aufweisen. Der Adapter kann von außen an die in einer Wanddose enthaltene Schnittstelle angesteckt werden oder auch zusammen mit der Schnittstelle in der Wanddose enthalten sein.

Die Stromversorgung der einzelnen Anschlußstellen erfolgt entweder über das Signalleitungsnetz oder über getrennte Versorgungsleitungen, die entsprechend dem Signalleitungsnetz verlaufen. In jedem Fall ist eine zentrale Stromversorgung für den Betrieb der Anschlußstellen vorgesehen.

Bei der Unterteilung der Anschlußstellen in einheitliche Schnittstellen und funktionsspezifische Adapter sind die Adapter sind in unterschiedlichen Adaptertypen verfügbar, wobei für jeden zu übertragenden Telegrammtyp ein Adaptertyp als Quelle und ein weiterer Adaptertyp als Ziel vorgesehen ist. Es ist auch möglich, den Adapter so auszubilden, daß er beim Anstecken an die Schnittstelle der Schnittstelle eine Information über den Adaptertyp mitteilt, z.B. die Information, daß dieser Adapter als Quelle für ein Schalt-Telegramm geeignet ist. Diese Information wird dann in die Schnittstelle der Speichereinrichtung eingespeichert. Die Information kann mit einem zusätzlichen Informationsstift übertragen werden, der von dem Adapter absteht und der eine kodierte Information trägt, die von der Schnittstelle gelesen werden kann. Andererseits ist es auch möglich, daß die Schnittstelle beim Anstecken eines Adapters an diesen Adapter eine bestimmte Signalfolge liefert, die von dem Adapter mit einem Signal oder einer Signalfolge beantwortet wird, welche den Adaptertyp angibt.

Der Adapter dient der Anpassung der Schnittstelle an das extern anzuschließende Gerät. Ein Quellen-Adapter ist geeignet, einen Schaltvorgang oder ein analoges oder digitales Signal so umzusetzen, daß dieses Signal der Schnittstelle zugeführt werden kann, das daraufhin ein entsprechendes Telegramm generiert, das über das Signalleitungsnetz übertragen wird. Das Telegramm enthält Quellen-Adresse, Ziel-Adresse, Telegrammtyp und Information. Die Schnittstellen sind aktive Komponenten, die eine elektrische Stromversorgung benötigen, während die Adapter passive Komponenten sind. Die Speichereinrichtungen in den Schnittstellen sind selbsthaltende Speicher, die auch beim Ausfall der Stromversorgung ihren Speicherinhalt behalten.

Im folgenden werden unter Bezugnahme auf die Zeichnungen Ausführungsbeispiele der Erfindung näher erläutert.

Es zeigen:
- Fig. 1: einen schematischen Aufbau des Signalübertragungssystems mit angeschlossenem Programmiergerät,
- Fig. 2: ein Blockschaltbild einer Universal-Schnittstelle,
- Fig. 3: einen Ablaufplan der Programmierung der Schnittstellen durch das Programmiergerät nach einer ersten Ausführungsform,
- Fig. 4: einen Ablaufplan der Programmierung der Schnittstellen nach einer zweiten Ausführungsform, und
- Fig. 5: einen Installationsplan für das Programmieren der Schnittstellen nach der zweiten Ausführungsform.

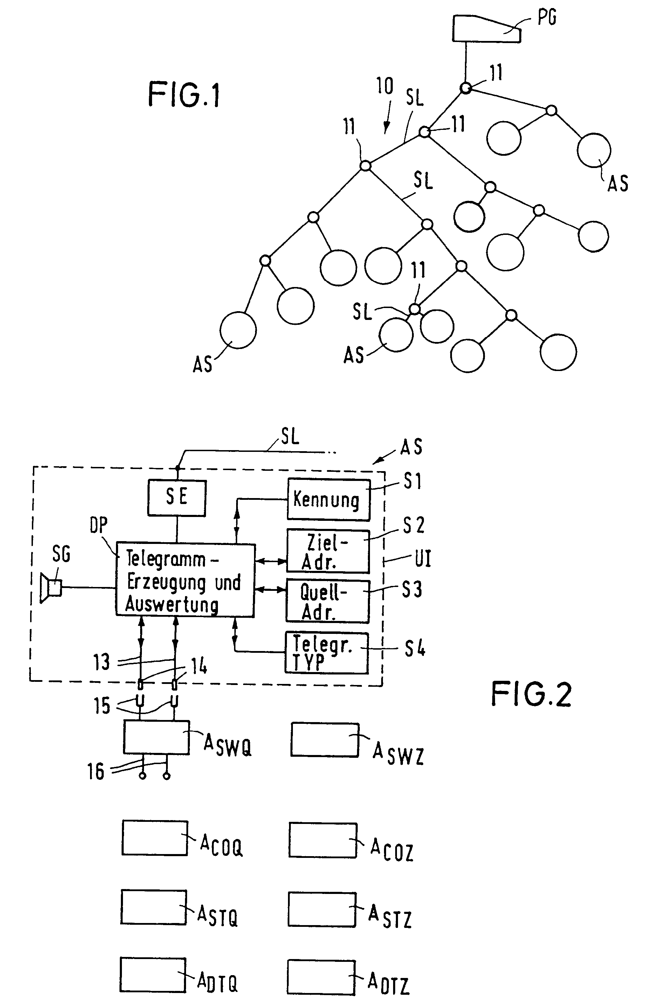

In Fig. 1 ist das Signalleitungsnetz 10 dargestellt, das aus Signalleitungen SL besteht, die bei dem vorliegenden Ausführungsbeispiel in Baumstruktur verbunden sind, wobei an jeder Abzweigungsstelle eine Abzweigdose 11, die eine Verbindungsvorrichtung enthält, angeordnet ist. Jede Signalleitung SL führt zu einer Anschlußstelle AS. Anstelle der in Fig. 1 dargestellten Baumstruktur kann das Signalleitungsnetz auch in Busstruktur ausgebildet sein, wobei die einzelnen Anschlußstellen AS entlang einer gemeinsamen Busleitung angeordnet sind.

Fig. 2 zeigt eine der Anschlußstellen AS. Diese Anschlußstelle AS enthält eine in einer (nicht dargestellten) Wanddose untergebrachte Universal-Schnittstelle UI. Die Schnittstelle UI enthält einen an die Signalleitung SL angeschlossenen Sende- und Empfangsteil SE, einen Datenprozessor DP, der mit dem Sende- und Empfangsteil SE verbunden ist, sowie Speichereinrichtungen S1,S2,S3 und S4. Die Speichereinrichtungen sind bei Installation der Schnittstelle UI leer und werden erst nach Installation mit entsprechenden Daten versehen. Die Speichereinrichtung S1 dient zur Aufnahme einer Kennung (Kenndaten) für die betreffende Schnittstelle, die Speichereinrichtung S2 dient zur Aufnahme einer oder mehrerer Ziel-Adressen, die Speichereinrichtung S3 dient zur Aufnahme einer oder mehrerer Quellen-Adressen und die Speichereinrichtung S4 dient zur Aufnahme einer Angabe über den Telegrammtyp, den die Schnittstelle UI verarbeiten bzw. übertragen soll.

Von dem Datenprozessor DP führen Leitungen 13 zu Anschlüssen 14, an die ein externer Adapter A angesteckt werden kann. Dieser Adapter weist Steckkontakte 15 zum Verbinden mit den Kontakten 14 der Schnittstelle UI auf, sowie Anschlüsse 16 für den Anschluß eines Gerätes, beispielsweise eines Schalters, eines Relais, einer Leuchte, eines Meßwertaufnehmers, eines Motors o.dgl.

Für die vier vorgesehenen Telegrammtypen
Schalt-Telegramm
Regel-Telegramm
Status-Telegramm
Datenübertragungs-Telegramm
sind jeweils zwei Adaptertypen vorgesehen, nämlich einer als Quelle und einer als Ziel. Insgesamt sind also acht verschiedene Adaptertypen vorhanden, von denen jeder an die Schnittstelle UI angeschaltet werden kann, nämlich
A_{SWQ}-Schalt-Adapter als Quelle
A_{SWZ}-Schalt-Adapter als Ziel
A_{COQ}-Regel-Adapter als Quelle
A_{COZ}-Regel-Adapter als Ziel
A_{STQ}-Status-Adapter als Quelle
A_{STZ}-Status-Adapter als Ziel
A_{DTQ}-Datenübertragungs-Adapter als Quelle
A_{DTZ}-Datenübertragungs-Adapter als Ziel.

An eine der Abzweigdosen 11 des Signalleitungsnetzes 10 wird gemäß Fig. 1 das Programmiergerät PG angeschlossen, das dazu dient, die Schnittstellen UI zu programmieren und das anschließend wieder entfernt werden kann, so daß das Signalleitungsnetz ohne Zentrale und ohne Programmiergerät betrieben werden kann. Das Programmiergerät PG kann über die Signalleitungen SL mit allen Schnittstellen UI kommunizieren, d.h. es kann Daten an die Schnittstellen senden und von den Schnittstellen ausgesandte Daten empfangen. Das Programmiergerät PG weist zahlreiche Tasten für die manuelle Eingabe von Daten sowie einen Datenprozessor DP auf.

Die vorstehend beschriebenen Schaltungen sind bei allen Programmierungs-Versionen, die nachstehend erläutert werden, vorhanden. Unterschiedlich ist bei den verschiedenen Programmierungs-Versionen der Aufbau bzw. die Funktion des Programmiergerätes.

### Version 1

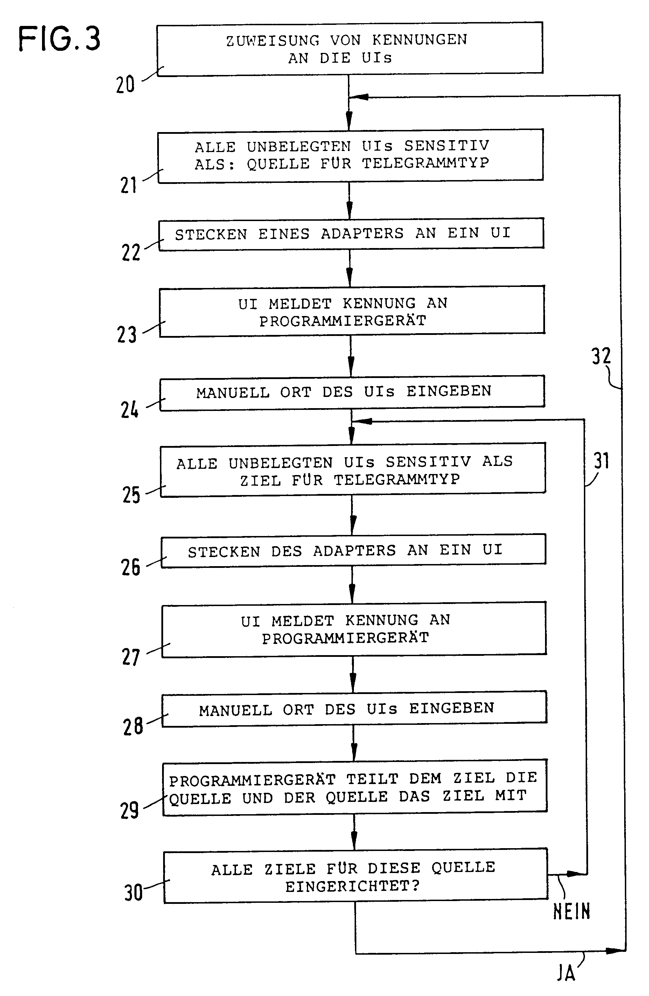

Der Ablauf der Programmierung der Schnittstellen UI ist in Fig. 3 dargestellt. Nachdem die Schnittstellen UI an den Anschlußstellen AS installiert und mit den Signalleitungen SL verbunden sind, erfolgt im Schritt 20 gemäß Fig. 3 zunächst die Zuweisung von Kennungen an die UIs. Hierbei erhält jede Schnittstelle eine zufallsbedingte unverwechselbare Kennung (chaotische Verteilung), d.h. jede Schnittstelle erhält eine Kennzahl von 1 bis 255, ohne daß bekannt ist, welche Schnittstelle welche Kennzahl erhalten hat. Es ist nur sichergestellt, daß jede Schnittstelle eine Kennung erhalten hat, die in der Speichereinrichtung S1 dieser Schnittstelle gespeichert wird.

Die Zuweisung der Kennungen geschieht wie folgt:

Durch Betätigen einer Taste des Programmiergerätes PG beginnt der Initialisierungsvorgang, bei dem in jeder Schnittstelle UI ein in dem Datenprozessor DP enthaltener Zufallsgenerator gestartet wird. Danach werden alle UIs mit der DEFAULT-Adresse O aktiviert. Dies bedeutet, daß alle UIs mit der Adresse 0 auf das Signalleitungsnetz zugreifen, um mit dem Programmiergerät PG in Verbindung zu treten. Da hierbei mehrere UIs mit dem Programmiergerät korrespondieren wollen, treten Kollisionen auf, wodurch der Verbindungsaufbau zum Programmiergerät unmöglich wird. Die Kollision wird von dem UI durch eine LISTEN-TALK-Funktion erkannt. Nun wird in jedem UI die im Zufallsgenerator enthaltene Zahl ausgelesen und diese Zahlen werden unabhängig vom Programmiergerät PG durch die Schrittstellen UI dekrementiert und auf 0 abgefragt. Ist der Zahlenwert eines UIs auf 0 gefallen, erfolgt ein erneuter Versuch dieses UI, mit dem Programmiergerät in Kontakt zu kommen. Dasjenige UI, dessen Zahlenwert zuerst auf 0 abgefallen ist, erhält von dem Programmgerät PG die Kennung "1", das nächstfolgende UI die Kennung "2" usw.

Erfolgt eine weitere Kollision zweier oder mehrerer UIs, wird der Vorgang solange wiederholt, bis die Verbindung eines einzigen UIs zum Programmiergerät hergestellt ist.

Sobald alle UIs auf diese Weise einzeln mit dem Programmiergerät PG in Verbindung getreten sind und alle UIs eine individuelle Kennung erhalten haben, ist Schritt 20 gemäß Fig. 3 abgeschlossen. Es erfolgt nun die Endprogrammierung und die Komplettierungsphase. Hierbei werden in Schritt 21 alle noch nicht mit einem Adapter bestückten UIs von dem Programmiergerät PG als Quelle für den Telegrammtyp "Schalt-Telegramm" sensitiv gemacht. Der Telegrammtyp "Schalt-Telegramm" ist der am häufigsten vorkommende Telegrammtyp, der zunächst abgearbeitet wird. In Schritt 22 erfolgt das Stecken eines Adapters A_{SWQ} an eines der UIs, das als Quelle für Schalt-Telegramme vorgesehen ist. In Schritt 23 meldet das betreffende UI seine Kennung, die ihm im Schritt 20 zugeteilt worden ist, an das Programmiergerät. Danach wird in Schritt 24 der Ort des UIs manuell in das Programmiergerät PG eingegeben. Diese Ortsangabe wird im Programmiergerät der Kennung des betreffenden UIs zugeordnet.

Im Schritt 25 werden alle noch nicht mit einem Adapter A belegten UIs als Ziel für den Telegrammtyp "Schalt-Telegramm" sensitiv gemacht. Dann erfolgt im Schritt 26 das Einstecken eines Adapters A_{SWZ} an ein UI, das mit dem zuvor als Quelle eingerichteten UI kommunizieren soll. Das Ziel-UI meldet seine Kennung an das Programmiergerät PG in Schritt 27. In Schritt 28 wird manuell der Ort des zuletzt mit einem Adapter belegten UIs in das Programmiergerät eingegeben und in Schritt 29 teilt das Programmiergerät dem Ziel-UI die Kennung der Quelle und dem Quellen-UI die Kennung des Zieles mit. Diese Daten werden in die Speichereinrichtungen S2 und S3 eingespeichert. Außerdem wird in die Speichereinrichtung S4 der Telegrammtyp, z.B. "Schalt-Telegramm", eingespeichert.

Im Schritt 30 wird festgelegt, ob für dieselbe Quelle sämtliche Ziele eingerichtet worden sind. Wenn eine Quelle gleichzeitig mit mehreren Zielen kommunizieren soll, müssen für dieselbe Quelle noch die weiteren Ziele eingerichtet werden. Dies geschieht durch die Schleife 31, die zum Schritt 25 zurückführt.

Wenn sämtliche Ziele für dieselbe Quelle eingerichtet sind, wird über Schleife 32, die zu Schritt 21 zurückführt, das nächste UI als Quelle eingerichtet.

Nachdem alle Schnittstellen für einen Telegrammtyp eingerichtet sind, wird zu dem nächstfolgenden Telegrammtyp, z.B. "Regel-Telegramm", übergegangen, wobei die für diesen Telegrammtyp vorgesehenen Schnittstellen eingerichtet und programmiert werden.

### Version 2

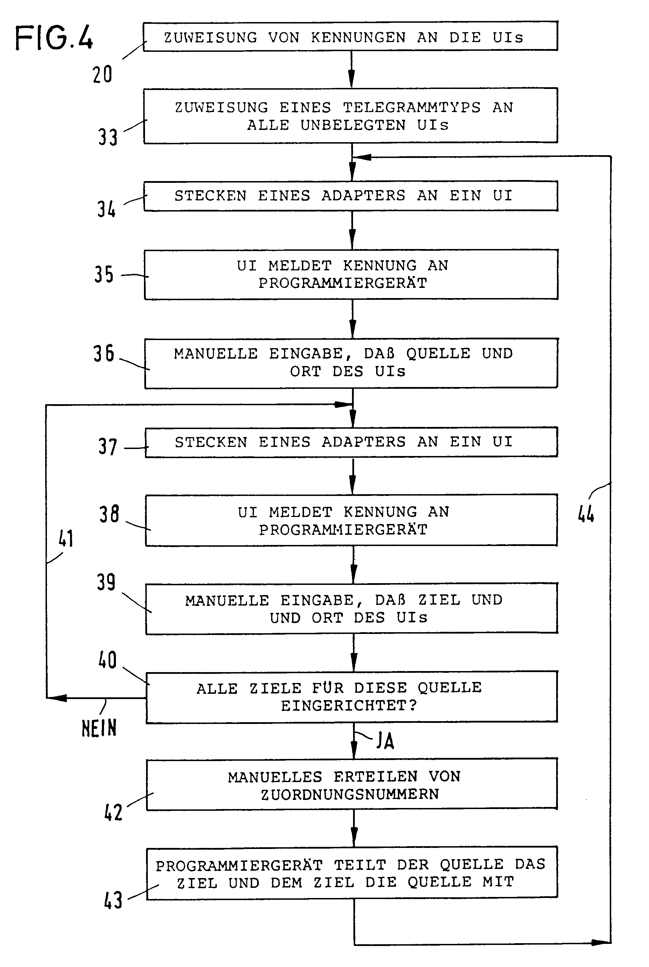

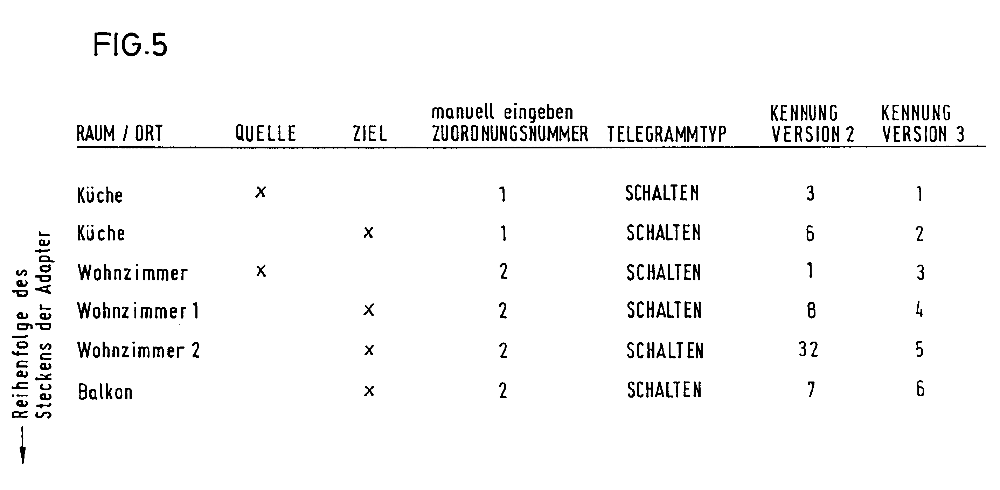

Eine andere Art der Programmierung der Schnittstellen ist in den Fign. 4 und 5 angegeben.

Zunächst erfolgt in Schritt 20 von Fig. 4 die Zuweisung von Kennungen an die UIs in gleicher Weise wie bei Version 1 beschrieben. Dann wird allen noch nicht mit einem Adapter belegten UIs ein Telegrammtyp, z.B. "Schalt-Telegramm", zugewiesen (Schritt 33). In diesem Schritt erfolgt noch keine Festlegung, ob es sich um eine Quelle oder ein Ziel handelt. Im Schritt 34 wird ein Adapter an eines der UIs angesteckt und in Schritt 35 meldet dieses UI seine Kennung an das Programmiergerät PG. Dann erfolgt in Schritt 36 am Programmiergerät eine manuelle Eingabe, daß es sich bei dem UI, das zuletzt mit einem Adapter bestückt worden ist, um eine Quelle handelt, sowie die Eingabe des Ortes, an dem dieses UI installiert ist. In Schritt 37 wird ein UI, das als Ziel für das zuvor als Quelle bestückte UI vorgesehen ist, mit einem Adapter bestückt. In Schritt 38 meldet das UI seine Kennung an das Programmiergerät PG. Danach wird in Schritt 39 manuell in das PG eingegeben, daß dieses UI ein Ziel ist, sowie der Ort, an dem dieses UI sich befindet (Schritt 39).

In Schritt 40 ist zu entscheiden, ob sämtliche Ziele für das Quellen-UI eingerichtet sind. Wenn dies noch nicht der Fall ist, wird über die Schleife 41 zum Schritt 37 zurückgekehrt und ein weiteres UI als Ziel für dasselbe Quellen-UI eingerichtet. Wenn sämtliche Ziele für dieselbe Quelle eingerichtet sind, erteilt das Programmiergerät PG der Gruppe aus Quellen und Zielen eine Zuordnungsnummer. Im Schritt 43 teilt das Programmiergerät der Quelle das Ziel und dem Ziel die Quelle mit, die in den Speichereinrichtungen S2 und S3 der beteiligten UIs gespeichert werden.

Danach wird über Schleife 44 zum Schritt 34 zurückgekehrt und eine weitere Gruppe aus Quellen und Zielen programmiert.

Bevor die Programmierung der Schnittstellen gemäß Fig. 4 erfolgt, wird der in Fig. 5 dargestellte Installationsplan aufgestellt, aus dem entnommen werden kann, an welchem Ort des Hauses welches Gerät installiert werden soll und von welchem Ort des Hauses dieses Gerät gesteuert bzw. an welche Stelle des Hauses eine Meldung gegeben werden soll. Die Quellen und Ziele werden in der Reihenfolge ihrer gegenseitigen Zuordnung angegeben und die Bestückung der Schnittstellen mit Adaptern erfolgt in der im Installationsplan angegebenen Reihenfolge. Aus Fig. 5 ist ersichtlich, daß zu der Quelle "Küche" das Ziel "Küche" gehört und daß zu der Quelle "Wohnzimmer" die drei Ziele "Wohnzimmer 1", "Wohnzimmer 2" und "Balkon" gehören. Jede Kombination aus Quelle und Ziel(en) wird mit einer manuell in das Programmiergerät einzugebenden Zuordnungsnummer versehen. So gehören beispielsweise zur Quelle mit der Zuordnungsnummer "2" sämtliche Ziele mit der Zuordnungsnummer "2".

In Fig. 5 sind in der Spalte "KENNUNG" für Version 2 die im Schritt 20 willkürlich festgelegten Kennungen der einzelnen UIs angegeben.

### Version 3

Die Version 3 der Programmierung der Schnittstellen entspricht prinzipiell der Version 2, wobei jedoch die Zuweisungsphase (Schritt 20) zugleich mit der Bestückung der Schnittstellen mit Adaptern ausgeführt wird. Daher ist eine vorgeordnete Zuweisungsphase nicht erforderlich. Wie aus der rechten Spalte von Fig. 5 hervorgeht, werden bei Version 3 die UIs in derjenigen Reihenfolge, in der sie mit Adaptern bestückt werden, von dem Programmiergerät PG mit Kennziffern (Kennungen) versehen. Der Einsatz von Zufallsgeneratoren in den UIs entfällt daher.

In gleicher Weise wie bei Version 2 die Zuweisung von Kennungen an die UIs in einem vorgeordneten separaten Schritt entfallen kann, kann dieses Prinzip auch bei Version 1 durchgeführt werden, wobei die Schnittstellen in der Reihenfolge ihrer Bestückung mit Adaptern fortlaufende Kennungen erhalten.

### Version 4

Bei Version 4 der Schnittstellen-Programmierung werden alle Schnittstellen mit einer unverwechselbaren Kennung versehen, was entweder durch den beschriebenen Schritt 20 von Fig. 3 oder in der Reihenfolge der Bestückung mit Adaptern geschehen kann. Wenn die Kennungszuweisung in der Reihenfolge der Bestückung mit Adaptern geschieht, wird manuell gleichzeitig der jeweilige Ort der Schnittstelle in das Programmiergerät PG eingegeben. Dann kann die Programmierung der Schnittstellen "frei" am Programmiergerät erfolgen, wobei der Monteur dem Programmiergerät eingibt, welches UI als Quelle mit welchem UI als Ziel zusammenwirken soll und welcher Telegrammtyp zwischen den UIs übertragen werden soll.

### Version 5

Version 5 bezieht sich auf die Lokalisierung der Schnittstellen, denen zuvor eine Kennung entweder in der Reihenfolge der Bestückung mit Adaptern oder nach dem beschriebenen Zufallsprinzip zugeteilt wurde. Bei dieser Version können alle UIs in der Installationsphase mit den zugehörigen Adaptern bestückt werden und erst anschließend erfolgt die Identifizierung der Orte der verschiedenen UIs.

Jedes UI ist mit einem Signalgenerator SG ausgestattet, bei dem es sich um einen optischen oder akustischen Signalgeber handeln kann. Das Programmiergerät PG ruft nacheinander die verschiedenen Kennungen auf und jedes UI, dessen Kennung aufgerufen worden ist, reagiert hierauf mit einer Aktivierung des entsprechenden Signalgenerators SG. Auf diese Weise kann jedes UI lokalisiert werden und der Ort des UI wird manuell in das Programmiergerät PG eingegeben und in diesem der Kennung des betreffenden UIs zugeordnet. Das Weiterschalten von einer Kennung zur nächsten kann in vorher festgelegten Zeitabständen erfolgen oder zweckmäßigerweise in Abhängigkeit davon, daß der Ort eines UIs, dessen Signalgenerator SG aktiviert worden ist, manuell in das Programmiergerät eingegeben wurde. Nach Vervollständigung dieser Ortseingabe wählt das Programmiergerät die nächstfolgende Kennung aus.

Ein besonderer Vorteil des Signalübertragungssystems besteht darin, daß eine sehr große Anzahl von Schnittstellen UI möglich ist und daß beliebige Erweiterungen nachträglich durchgeführt werden können. Nach Installation und Programmierung einer Anlage kann das Programmiergerät entfernt werden. Das Programmiergerät enthält vorzugsweise ein Display oder einen Bildschirm, auf dem die Programmierung des Signalübertragungssystem angezeigt werden kann.

## Patentansprüche

1. Verfahren zum Initialisieren eines installierten digitalen Signalübertragungssystems für miteinander korrespondierende Geräte, die an ein Signalleitungsnetz (10) angeschlossen sind, insbesondere für die Hausleittechnik, mit mehreren Anschlußstellen (AS), von denen jede eine Sende- und Empfangseinrichtung (SE) sowie eine Steuer- und Speichereinrichtung (DP,S1-S4) zur Durchführung eines Telegrammverkehrs zwischen den Anschlußstellen (AS) enthält, wobei an die Anschlußstellen Geräte anschließbar sind,
bei welchem ein Programmiergerät (PG) jeder angeschlossenen Anschlußstelle (AS) des Signalleitungsnetzes (10) eine unverwechselbare Kennung zuteilt, die mit einer ersten Speichereinrichtung (S1) der jeweiligen Anschlußstelle gespeichert wird,
wobei jede Anschlußstelle (AS) durch einen an ihr durchgeführten Schalt- oder Montagevorgang aktiviert wird, um ein Aktivierungssignal zu melden, wodurch der Ort der Anschlußstelle identifizierbar ist,
**dadurch gekennzeichnet**,
daß über das Programmiergerät (PG)
in jede Anschlußstelle die Ziel-Adresse oder Quellen-Adresse mindestens einer anderen Anschlußstelle eingegeben und mit einer zweiten Speichereinrichtung (S2,S3) gespeichert wird, mit welcher die betreffende Anschlußstelle korrespondieren soll,
in jede Anschlußstelle eine Angabe über den Telegrammtyp eingegeben und mit einer dritten Speichereinrichtung (S4) gespeichert wird
und daß das Programmiergerät (PG) nach Durchführung der Initialisierung entfernt wird.

2. Verfahren zum Initialisieren eines digitalen Signalübertragungssystems für miteinander korrespondierende Geräte, die an ein Signalleitungsnetz (10) angeschlossen sind, insbesondere für die Hausleittechnik, mit mehreren Anschlußstellen (AS) , von denen jede eine Sende- und Empfangseinrichtung (SE) sowie eine Steuer- und Speichereinrichtung (DP,S1-S4) zur Durchführung eines Telegrammverkehrs zwischen den Anschlußstellen (AS) enthält, wobei an die Anschlußstellen Geräte anschließbar sind,
bei welchem ein Programmiergerät (PG) jeder angeschlossenen Anschlußstelle (AS) des Signalleitungsnetzes (10) eine unverwechselbare Kennung zuteilt, die in einer ersten Speichereinrichtung (S1) der jeweiligen Anschlußstelle gespeichert wird,
**dadurch gekennzeichnet**,
daß das Programmiergerät (PG) die Kennungen der Anschlußstellen (AS) nacheinander aufruft und die Anschlußstellen (AS) auf den Aufruf reagierende Signalgeber (SG) aufweisen, wodurch beim Ansprechen eines Signalgebers der Ort der Anschlußstelle identifizierbar ist,
und daß über das Programmiergerät (PG)
in jede Anschlußstelle die Ziel-Adresse oder Quellen-Adresse mindestens einer anderen Anschlußstelle eingegeben und mit einer zweiten Speichereinrichtung (S2,S3) gespeichert wird, mit welcher die betreffende Anschlußstelle korrespondieren soll,
in jede Anschlußstelle eine Angabe über den Telegrammtyp eingegeben und mit einer dritten Speichereinrichtung (S4) gespeichert wird
und daß das Programmiergerät (PG) nach Durchführung der Initialisierung entfernbar ist.

3. Verfahren nach Anspruch 1, dadurch gekennzeichnet, daß das Festlegen eines Telegrammtyps für jede Schnittstelle (UI) dadurch erfolgt, daß das Programmiergerät (PG) allen noch nicht aktivierten Schnittstellen denselben Telegrammtyp zuweist, der nach Aktivierung einer Anschlußstelle (AS) nur in dieser Anschlußstelle gespeichert wird.

4. Verfahren nach einem der Ansprüche 1 bis 3, dadurch gekennzeichnet, daß das Festlegen der Funktion als Quelle oder Ziel für jede Schnittstelle (UI) dadurch erfolgt, daß das Programmiergerät (PG) allen noch nicht aktivierten Anschlußstellen dieselbe Funktion zuweist, die nach Aktivierung einer Anschlußstelle nur in dieser Anschlußstelle gespeichert wird.

5. Verfahren nach einem der Ansprüche 1 bis 4, dadurch gekennzeichnet, daß für die Zuteilung der Kennung in jeder Anschlußstelle ein Zufallsgenerator von dem Programmiergerät (PG) aktiviert wird und eine durch Taktung fortzuzählende Zahl annimmt, daß die Anschlußstellen (AS) beim Erreichen eines vorgegebenen Zählerwertes ein Meldesignal an das Programmiergerät senden, und daß das Programmiergerät nur derjenigen Anschlußstelle eine Kennung zuteilt, die zuerst ein Meldesignal ausgesandt hat.

6. Verfahren nach einem der Ansprüche 1 bis 5, wobei die Anschlußstellen (AS) einheitliche Schnittstellen (UI) aufweisen, welche die Sende- und Empfangseinrichtung (SE) sowie die Steuer- und Speichereinrichtung (DP,S1-S4) enthalten, an jeder Schnittstelle (UI) ein dem Anschlußstellentyp entsprechender Adapter (A) vorgesehen ist, welcher als separates Bauteil lösbar mit der Schnittstelle verbunden ist, dadurch gekennzeichnet, daß das Aktivieren der Anschlußstelle durch Bestücken der Schnittstelle (UI) mit dem Adapter (A) erfolgt.

7. Verfahren nach Anspruch 6, dadurch gekennzeichnet, daß das Zuteilen der Kennung und das Identifizieren des Ortes der Anschlußstelle (AS) gemeinsam durch das Anstecken eines Adapters (A) an die Schnittstelle (UI) erfolgen.

8. Verfahren nach Anspruch 7, dadurch gekennzeichnet, daß die miteinander korrespondierenden Anschlußstellen (AS) von dem Programmiergerät (PG) in der Reihenfolge ihrer Bestückung mit Adaptern festgelegt werden.

## Claims

1. A method of initializing an installed digital signal transmission system for appliances corresponding with one another, which are connected to a signal line network (10), particularly for the in-house information distribution network technique, comprising several terminals (AS) each of which includes a transmitting and receiving means (SE) as well as a control and memory means (DP,S1-S4) to perform a telegram communication between the terminals, appliances being connectable to the terminals,
wherein a programming device (PG) allocates a distinctive code to each connected terminal (AS) of the signal line network (10), which is stored by means of a first memory means (S1) of the respective terminal,
each terminal (AS) being activated by a switching or mounting process performed thereat in order to transmit an activation signal, whereby the location of the terminal is identifiable,
**characterized in**
that, via the programming device (PG),
into each terminal, the destination address or source address of at least one other terminal is inputted, and it is stored by means of a second memory means (S2,S3) which the respective terminal is to correspond with,
into each terminal, an indication about the telegram type is inputted and stored by means of a third memory means (S4), and that the programming device (PG) is removed after the initialization has been performed.

2. A method of initializing a digital signal transmission system for appliances corresponding with one another, which are connected to a signal line network (10), particularly for the in-house information distribution network technique, comprising several terminals (AS) each of which includes a transmitting and receiving means (SE) as well as a control and memory means (DP,S1-S4) to perform a telegram communication between the terminals, appliances being connectable to the terminals,
wherein a programming device (PG) allocates a distinctive code to each connected terminal (AS) of the signal line network (10), which is stored in a first memory means (S1) of the respective terminal,
**characterized in**
that the programming device (PG) successively calls the codes of the terminals (AS) and the terminals (AS) comprise signal transmitters (SG) responding to the call, whereby the location of the terminal is identifiable upon responding of a signal transmitter,
and that via the programming device (PG),
into each terminal, the destination address or source address of at least one other terminal is inputted, and it is stored by means of a second memory means (S2,S3) which the respective terminal is to correspond with,
an indication about the telegram type is inputted into each terminal and stored by means of a third memory means (S4),
and that the programming device (PG) is removable after the initialization has been performed.

3. The method according to claim 1, characterized in that the setting of a telegram type for each interface (UI) is performed by the programming device (PG) allocating the same telegram type to all interfaces not yet activated, which, after a terminal (AS) has been activated, is stored only in this terminal.

4. The method according to one of claims 1 to 3, characterized in that the setting of the function as source or destination for each interface (UI) is performed by the programming device (PG) allocating the same function to all terminals not yet activated, which, after a terminal has been activated, is stored only in this terminal.

5. The method according to one of claims 1 to 4, characterized in that a random generator is activated by the programming device (PG) to allocate the code in each terminal and assumes a number to be incremented or decremented by clocking, that the terminals (AS) transmit a status signal to the programming device upon reaching a predetermined counter value, and that the programming device allocates a code only to that terminal which has emitted a status signal first.

6. The method according to one of claims 1 to 5, wherein the terminals (AS) comprise uniform interfaces (UI) including the transmitting and receiving means (SE) as well as the control and memory means (DP, S1-S4), wherein, at each interface (UI), an adapter (A) corresponding to the terminal type is provided, which is detachably connected to the interface as a separate component, characterized in that the terminal is activated by mounting the adapter (A) to the interface (UI).

7. The method according to claim 6, characterized in that the allocation of the code and the identification of the location of the terminal are performed in common by attaching an adapter (A) to the interface (UI).

8. The method according to claim 7, characterized in that the terminals (AS) corresponding with one another are set by the programming device (PG) in the order of them being equipped with adapters.

## Revendications

1. Procédé pour l'initialisation d'un système de transmission de données numériques installé pour des appareils correspondant entre eux qui sont raccordés à un réseau de lignes de données (10), en particulier pour la technique d'installations domestiques à plusieurs points de raccordement (AS) dont chacun comporte un dispositif émetteur et récepteur (SE) ainsi qu'un dispositif de commande et de mémoire (DP,S1 à S4) pour la réalisation d'une circulation de télégrammes entre les points de raccordement (AS), des appareils pouvant être raccordés aux points de raccordement,
dans lequel un appareil de programmation (PG) attribue à chaque point de raccordement (AS) du réseau de lignes de données (10) raccordé un code indubitable qui est mémorisé à l'aide d'un premier dispositif de mémoire (S1) du point de raccordement concerné,
chaque point de raccordement (AS) étant activé, par une opération de commutation ou de montage réalisée sur celui-ci, afin de transmettre un signal d'activation par lequel peut être identifié l'emplacement du point de raccordement,
caractérisé par le fait
que par l'appareil de programmation (PG)
est introduite, dans chaque point de raccordement, l'adresse cible ou l'adresse de source d'au moins un autre point de raccordement, et il est mémorisé par un second dispositif de mémoire (S2,S3) auquel doit correspondre le point de raccordement en question,
est introduite, dans chaque point de raccordement, et mémorisée par un troisième dispositif de mémoire (S4), une indication du type de télégramme,
et que l'appareil de programmation (PG) est retiré après la réalisation de l'initialisation.

2. Procédé pour l'initialisation d'un système de transmission de données numériques pour des appareils correspondant entre eux qui sont raccordés à un réseau de lignes de données (10), en particulier pour la technique d'installations domestiques à plusieurs points de raccordement (AS) dont chacun comporte un dispositif émetteur et récepteur (SE) ainsi qu'un dispositif de commande et de mémoire (DP, S1 à S4) pour la réalisation d'une circulation de télégrammes entre les points de raccordement (AS), des appareils pouvant être raccordés aux points de raccordement,
dans lequel un appareil de programmation (PG) attribue à chaque point de raccordement (AS) du réseau de lignes de données (10) raccordé un code indubitable qui est mémorisé à l'aide d'un premier dispositif de mémoire (S1) du point de raccordement concerné,
caractérisé par le fait
que l'appareil de programmation (PG) appelle l'un après l'autre les codes des points de raccordement (AS) et que les points de raccordement (AS) présentent des capteurs de données (SG) réagissant à l'appel, grâce à quoi, lors de la réponse d'un capteur de données, l'emplacement du point de raccordement peut être identifié ;
et que par l'appareil de programmation (PG)
est introduite, dans chaque point de raccordement, l'adresse cible ou l'adresse de source d'au moins un autre point de raccordement, et il est mémorisé par un second dispositif de mémoire (S2,S3) auquel doit correspondre le point de raccordement en question,
est introduite, dans chaque point de raccordement, et mémorisée par un troisième dispositif de mémoire (S4), une indication du type de télégramme,
et que l'appareil de programmation (PG) peut être retiré après la réalisation de l'initialisation.

3. Procédé selon la revendication 1, caractérisé par le fait que la fixation d'un type de télégramme pour chaque interface (UI) s'effectue en ce que l'appareil de programmation (PG) attribue à toutes les interfaces non encore activées le même type de télégramme qui, après l'activation d'un point de raccordement (AS), n'est mémorisé que dans ce point de raccordement.

4. Procédé selon l'une des revendications 1 à 3, caractérisé par le fait que la fixation de la fonction de source ou de cible s'effectue pour chaque interface (UI) en ce que l'appareil de programmation (PG) attribue à tous les points de raccordement non encore activés la même fonction qui, après l'activation d'un point de raccordement (AS), n'est mémorisée que dans ce point de raccordement.

5. Procédé selon l'une des revendications 1 à 4, caractérisé par le fait que, pour l'attribution du code à chaque point de raccordement, un générateur aléatoire est activé par l'appareil de programmation (PG) et adopte, par une pulsation, un nombre progressif, que les points de raccordement (AS) transmettent, lorsqu'est atteinte une valeur de compteur prédéterminée, un signal d'état à l'appareil de programmation, et que l'appareil de programmation n'attribue de code qu'au point de raccordement qui a émis le premier un signal d'état.

6. Procédé selon l'une des revendications 1 à 5, dans lequel les points de raccordement (AS) présentent des interfaces (UI) unitaires qui comportent le dispositif émétteur et récepteur (SE) ainsi que le dispositif de commande et de mémoire (DP, S1 - S4), à chaque interface (UI) est prévu un adaptateur (A) correspondant au type de point de raccordement qui est, en tant qu'élément séparé, connecté de manière amovible à l'interface, caractérisé par le fait que l'activation du point de raccordement s'effectue en équipant l'interface (UI) de l'adaptateur (A).

7. Procédé selon la revendication 6, caractérisé par le fait que l'attribution du code et l'identification de l'emplacement du point de raccordement (AS) s'effectuent en même temps en enfichant un adapteur (A) dans l'interface (UI).

8. Procédé selon la revendication 7, caractérisé par le fait que les points de raccordement (AS) correspondant entre eux sont déterminés par l'appareil de programmation (PG) dans l'ordre de leur équipement par des adaptateurs.
